# EUROPÄISCHE PATENTANMELDUNG

(11) **EP 4 686 022 A1**
(43) Veröffentlichungstag der Anmeldung: **28.01.2026**
(21) Anmeldenummer: 24190675.9
(22) Anmeldetag: 24.07.2024
(51) Int. Cl.: H02H 3/04, H02H 3/08, H02H 3/05, H01H 9/54, H02H 1/00

(54) **ELEKTRISCHE SICHERUNGSEINRICHTUNG**

(71) Anmelder: Universität Kassel (Körperschaft d. öffentlichen Rechts), 34125 Kassel (DE)
(72) Erfinder: BÖRCSÖK, Josef, 68753 Waghäusel (DE); SCHWARZ, Michael, 65510 Idstein (DE); TELAWI, Samer, 34125 Kassel (DE); DRABESCH, Malte, 34125 Kassel (DE); MICHEL, Jakob, 34134 Kassel (DE); ECKHARDT, Jan, 34123 Kassel (DE); FRODL, Steffen, 34127 Kassel (DE)
(74) Vertreter: Walther Bayer Faber Patentanwälte PartGmbB

(57) **Zusammenfassung**

Gegenstand der Erfindung ist ein Sicherungseinrichtung (1) für eine elektrische Absicherung eines Stromleiters (10) und ein Verfahren zum Betrieb der Sicherungseinrichtung (1), wobei der der Stromleiter (10) von einem Eingangskontakt (K1) bis zu einem Ausgangskontakt (K2) erstreckt und in dem mehrere Sicherungskomponenten (11) angeordnet sind, die mittels einer Prozessoreinheit (12) steuerbar und überwachbar sind, wobei die Sicherungskomponenten (11) wenigstens folgendes umfassen:
- einen ersten und einen zweiten Stromstärkensensor (H1, H2) zur Überwachung des aktuell fließenden Stromes im Stromleiter (10);
- einen erstes und ein zweites Halbleiterschaltmittel (T1, T2) zur Abschaltung des Stromflusses im Stromleiter (10);
- einen erstes und ein zweites galvanisch trennendes Schaltmittel (S1, S2) zur Abschaltung des Stromflusses im Stromleiter (10);
- einen dritten und einen vierten Stromstärkensensor (H3, H4) zur Überwachung des aktuell fließenden Stromes im Stromleiter (10);
- wobei die ersten und zweiten Halbleiterschaltmittel (T1, T2) und die ersten und zweiten galvanisch trennenden Schaltmittel (S1, S2) von den ersten und zweiten Stromstärkensensoren (H1, H2) auf einer ersten Seite und von den dritten und vierten Stromstärkensensoren (H3, H4) auf einer zweiten Seite entlang des Stromleiters (10) eingeschlossen sind.

## Beschreibung

Die Erfindung betrifft eine Sicherungseinrichtung für eine elektrische Absicherung eines Stromleiters, der sich von einem Eingangskontakt bis zu einem Ausgangskontakt erstreckt und in dem mehrere Sicherungskomponenten angeordnet sind, die mittels einer Prozessoreinheit über Steuerleitungen steuerbar und überwachbar sind. Weiterhin richtet sich die Erfindung auf ein Verfahren zum Betrieb einer Sicherungseinrichtung für die elektrische Absicherung eines Stromleiters, wobei eine Sicherungseinrichtung der hier interessierenden Art beispielsweise für die Absicherung der elektrischen Einrichtung in einem Gebäude, in einem Kraftfahrzeug oder für elektrische Industrieeinrichtungen dienen kann.

### STAND DER TECHNIK

Beispielsweise ist aus der EP 3 928 402 B1 eine Laststeuervorrichtung zum Steuern einer Energiezufuhr zu einer elektrischen Last bekannt, die mit einem Ausgangsanschluss der Laststeuervorrichtung verbunden ist. Die Laststeuervorrichtung besitzt eine Überstromschutzschaltung mit mindestens einem Eingangsanschluss, der ausgelegt ist, um eine Zufuhrspannung von einem Energiezufuhrnetz zu empfangen, und mit einem Leistungsschalter, der durch die verbundene elektrische Last einen elektrischen Laststrom empfängt, und mit einer Stromanstiegsgeschwindigkeits-Sensorkomponente, die mit dem Leistungsschalter in Reihe geschaltet ist und ausgelegt ist, um einen Spannungsabfall direkt zu erzeugen, welcher der Stromanstiegsgeschwindigkeit des elektrischen Laststroms entspricht, der von dem Eingangsanschluss der Laststeuervorrichtung über die Stromanstiegsgeschwindigkeits-Sensorkomponente und den Leistungsschalter zu dem Ausgangsanschluss fließt. Weiterhin ist eine Treiberschaltung vorgesehen, die eine Niederspannungsseite und eine Hochspannungsseite umfasst, und wobei die Laststeuervorrichtung eine Energiezufuhr-Steuerschaltung mit einer Spannungssensorkomponente umfasst. Eine derartige Laststeuervorrichtung kann auch als Sicherungseinrichtung dienen, wobei die Sicherungseinrichtung dabei nicht vollständig redundant ausgelegt ist, und Selbstdiagnosen der einzelnen Sicherungskomponenten nicht ohne Weiteres möglich sind.

Aus der WO 2021/046097 A1 ist eine Sicherungseinrichtung bekannt, die für eine elektrische Absicherung von drei Stromleitern dient, der sich von einem Eingangskontakt bis zu einem Ausgangskontakt erstrecken. In diesen sind mehrere Sicherungskomponenten angeordnet, die mittels einer Prozessoreinheit über Steuerleitungen steuerbar und überwachbar sind. Die Sicherungskomponenten sind über eine Prozessoreinheit sowohl ansteuerbar als auch überwachbar, sodass damit bereits eine höhere Redundanz erreicht wird, und in gewissem Rahmen erlaubt die Sicherungseinrichtung auch die Selbstdiagnose der einzelnen Sicherungskomponenten.

### OFFENBARUNG DER ERFINDUNG

Die Aufgabe der Erfindung ist die weitere Verbesserung einer Sicherungseinrichtung, und zwar unter Verwendung von elektronischen, also halbleiterbasierten sowie mechanischen Sicherungskomponenten, wobei die eigentliche Abschalt- beziehungsweise Sicherungseinrichtung in diversitärer, resilienter und redundanter Form und vollständig diagnostizierbar eingerichtet sein soll, um somit Aussagen über den funktionalen Zustand der Sicherungseinrichtung beispielsweise in regelmäßigen Zeitabständen treffen zu können, wobei die Sicherungseinrichtung eine sehr hohe Betriebssicherheit aufweisen soll.

Diese Aufgabe wird ausgehend von einer Sicherungseinrichtung gemäß dem Oberbegriff des Anspruchs 1 und ausgehend von einem Verfahren zum Betrieb einer solchen Sicherungseinrichtung gemäß dem Oberbegriff des Anspruchs 10 mit den jeweils kennzeichnenden Merkmalen gelöst. Vorteilhafte Weiterbildungen der Erfindung sind in den abhängigen Ansprüchen angegeben.

Die Erfindung schließt mit Bezug auf die Sicherungseinrichtung für eine elektrische Absicherung eines Stromleiters die technische Lehre ein, dass die Sicherungskomponenten wenigstens folgendes umfassen: einen ersten und/oder einen zweiten Stromstärkensensor zur Überwachung des aktuell fließenden Stromes im Stromleiter, ein erstes und ein zweites Halbleiterschaltmittel zur Abschaltung des Stromflusses im Stromleiter, ein erstes und ein zweites galvanisch trennendes Schaltmittel zur Abschaltung des Stromflusses im Stromleiter, einen dritten und/oder einen vierten Stromstärkensensor zur Überwachung des aktuell fließenden Stromes im Stromleiter, wobei die ersten und zweiten Halbleiterschaltmittel und die ersten und zweiten galvanisch trennenden Schaltmittel von dem ersten und/oder zweiten Stromstärkensensor auf einer ersten Seite und von dem dritten und/oder vierten Stromstärkensensor auf einer zweiten Seite entlang des Stromleiters eingeschlossen sind.

Die erfindungsgemäße Ausgestaltung der Sicherungseinrichtung bietet eine sehr hohe Funktionssicherheit aufgrund ihrer voll-redundanten Anordnung sowohl von einem ersten und einem zweiten Halbleiterschaltmittel als auch von einem ersten und zweiten galvanisch trennenden Schaltmittel, und mittels der zumindest zwei vorzugsweise jedoch vier Stromstärkensensoren wird eine Stromüberwachung im Stromleiter ermöglicht, sodass zumindest mit den Stromstärkensensoren die sichere Abschaltung wenigstens eines Schaltmittels sowie auch eine Diagnose der Schaltmittel ermöglicht wird. Die Stromstärkensensoren sind vorliegend als Sicherungskomponenten mit aufgeführt, die Schaltmittel, also entweder basierend auf einem Halbleiter oder basierend auf einem galvanisch trennenden Mittel, werden nachfolgend als die "weiteren Schaltmittel" aufgeführt. Die Stromstärkensensoren sind beispielsweise als Magnetfeldsensoren ausgeführt und können auch als Leistungssensoren ausgeführt bzw. bezeichnet werden.

Die Stromstärkensensoren können beispielsweise Hall-Sensoren sein, die Halbleiterschaltmittel können aus Transistoren, MOSFET-Halbleiterschaltmitteln oder allgemein aus IGBT-Bausteinen gebildet sein (Insulated-Gate Bipolar Transistor). Schließlich können die galvanisch trennenden Schaltmittel durch Relais gebildet sein, die, wenn sie im abgeschalteten Zustand den Stromleiter trennen, zwischen dem Eingangskontakt und dem Ausgangskontakt eine galvanische Trennung erzeugen, wohingegen die Halbleiterschaltmittel nur eine elektronische Unterbrechung des Stromleiters erlauben.

Um die Betriebssicherheit der Sicherungseinrichtung noch weiter zu erhöhen, können beispielsweise gleiche Bauteile, die als Sicherungskomponenten im Stromleiter vorgesehen sind, von unterschiedlichen Herstellern stammen. Dadurch wird die Diversität des Aufbaus noch weiter verstärkt, was zu einer noch höheren Betriebssicherheit der Sicherungseinrichtung führt.

Die erfindungsgemäße Anordnung der Sicherungskomponenten sieht vor, dass mit Bezug auf den Verlauf des Stromleiters die Stromstärkensensoren außenseitig angeordnet sind, und zwischen den zumindest zwei Stromstärkensensoren sowohl die Halbleiterschaltmittel als auch die galvanisch trennenden Schaltmittel angeordnet sind. Die Stromstärkensensoren sind beispielsweise Magnetfeldsensoren. Im einfachsten Fall kann insofern ein Hall-Sensor, ein Transistor, ein Relais, ein weiteres Relais, ein weiterer Transistor und schließlich wieder ein Hall-Sensor zwischen dem Eingangskontakt und dem Ausgangskontakt im Stromleiter eingebracht sein. Vorzugsweise können jedoch sowohl auf der Seite des Eingangskontaktes als auch auf der Seite des Ausgangskontaktes, also die vier Schaltmittel einschließend, jeweils zwei Stromstärkensensoren vorgesehen werden, um durch diese Redundanz die Betriebssicherheit noch weiter zu erhöhen.

Durch die redundante Anordnung sowohl eines Halbleiterschaltmittels als auch eines galvanisch trennenden Schaltmittels, also etwa einem Relais, entsteht der Vorteil, dass bei höheren Spannungen im Stromleiter im normalen Schaltvorgang zunächst das Halbleiterschaltmittel schaltet, um eine kontaktlose Trennung des Stromflusses im Stromleiter zu erzeugen, und anschließend können die galvanisch trennenden Schaltmittel aktiviert werden, um den Stromfluss abzuschalten. Dadurch werden Lichtbögen in den galvanisch trennenden Schaltmitteln vermieden, was insofern nicht zu einem weiteren möglichen Einbrand in den Kontakten führt. Wird der Stromfluss wieder eingeschaltet, können zunächst die galvanisch trennenden Schaltmittel geschlossen werden, um erst anschließend die Halbleiterschaltmittel zu schließen.

Die Prozessoreinheit ist so ausgelegt, dass er die einzelnen Sicherungskomponenten sehr schnell und mit hoher Zeitauflösung ansteuern kann, um insbesondere durch die Halbleiterschaltmittel sehr kurze Schaltzeiten zu ermöglichen, zudem jedoch durch die galvanisch trennenden Schaltmittel eine sehr hohe Abschaltsicherheit ermöglichen können. Die Prozessoreinheit kann beispielsweise einen 1oo2, 1oo3, 1ooX, 2oo3, 2ooX - Mikroprozessor umfassen, wodurch eine sogenannte "1von2"-Prozessoreinheit Verwendung findet, die eine Abschaltung ermöglicht, wenn ein Messwert einen Abschaltwert erreicht oder dieser schlechter wird, also auf sonstige Weise ein Fehler vorliegt. Eine solche Art der Abschaltung von Schaltelementen bietet eine sehr hohe Sicherheit.

Es ist zu erwähnen, dass ein weiterer Stromleiter, beispielsweise ein Nullleiter, vorhanden sein kann, wobei die erfindungsgemäße Sicherungseinrichtung beispielsweise in einem Außenleiter Verwendung findet, wenn es sich um eine Netzversorgung handelt, wobei eine solche Sicherungseinrichtung auch beispielsweise im Pluspol einer KFZ-Stromversorgung oder in der Stromversorgung eines Elektroantriebs für ein Kraftfahrzeug Anwendung findet.

Insbesondere können die ersten und zweiten galvanisch trennenden Schaltmittel vom ersten Halbleiterschaltmittel auf einer ersten Seite und vom zweiten Halbleiterschaltmittel auf einer zweiten Seite entlang des Stromleiters eingeschlossen sein. Mit anderen Worten befinden sich die beiden galvanisch trennenden Schaltmittel eingeschlossen durch die Halbleiterschaltmittel im Stromleiter, sodass ausgehend von der Mitte zwischen den beiden galvanisch trennenden Schaltmitteln die beiden galvanisch trennenden Schaltmittel, anschließend die Halbleiterschaltmittel und weiterhin anschließend die wenigstens einen oder zwei Stromstärkensensoren folgen, sodass die Anordnung der Sicherungskomponenten ausgehend von der Mitte zwischen den beiden galvanisch trennenden Schaltmitteln symmetrisch ausgebildet ist.

Insofern sei noch einmal aufgeführt, dass die Sicherungskomponenten in nicht abschließender Aufzählung beginnend vom Eingangskontakt bis zum Ausgangskontakt entlang des Stromleiters folgende Reihenfolge aufweisen: erster Stromstärkensensor und/oder zweiter Stromstärkensensor, erstes Halbleiterschaltmittel, erstes galvanisch trennendes Schaltmittel, zweites galvanisch trennendes Schaltmittel, zweites Halbleiterschaltmittel, dritter Stromstärkensensor und/oder vierter Stromstärkensensor.

Mit weiterem Vorteil kann in der Anordnung der Sicherungskomponenten ein ladungsspeicherndes Bauteil, insbesondere ein elektrischer Kondensator oder ein elektrischer Akkumulator, eingebracht sein, um bei spannungslosem Eingangskontakt eine Selbstdiagnose zu ermöglichen. Sind der Eingangskontakt und damit auch der Ausgangskontakt stromlos, kann das ladungsspeichernde Bauteil, bestenfalls ein Hochleistungskondensator oder ein Akkumulator, eine Spannung bereitstellen, sodass über die Prozessoreinheit einzelne Sicherungskomponenten ein- und ausgeschaltet werden können, und es kann eine Abfrage über die Stromstärkensensoren erfolgen, sodass damit bereits eine Spannung über das ladungsspeichernde Bauteil bereitgestellt werden kann, die hinreichend ist, um die Selbstdiagnose durchzuführen, zudem kann das Bauteil zur Filterung von Störsignalen dienen. Die Prozessoreinheit kann die Spannung der zu sichernden Versorgung überwachen, die eigene Versorgung und die "Notversorgung" der Batterie oder des Kondensators, wenn Versorgung instabil wird, dann kann das ladungsspeichernde Bauteil zur sicheren Abschaltung genutzt werden. Allgemein kann so ein unnatürliches und riskantes Spannungsverhalten zu sicheren Abschaltung genutzt werden.

Das ladungsspeichernde Bauteil kann eigentlich an beliebiger Stelle im Stromleiter eingebracht werden, es ist jedoch vorteilhaft, dass das ladungsspeichernde Bauteil zwischen dem ersten und zweiten Stromstärkensensor einerseits und dem ersten Halbleiterschaltmittel andererseits im Stromleiter angeordnet ist. Gleichwertig wäre eine Anordnung des ladungsspeichernden Bauteils zwischen dem dritten und vierten Stromstärkensensor und dem zweiten Halbleiterschaltmittel.

Die Sicherungseinrichtung kann nur eine Stromüberwachung beispielsweise über Stromstärkensensoren umfassen, es ist jedoch von weiterem Vorteil, wenn auch eine Spannungsüberwachung benachbart zu oder innerhalb der Sicherungskomponenten eingerichtet ist. So kann wenigsten ein und vorzugsweise mehrere galvanisch getrennte Sensoren vorgesehen werden, wobei der oder die galvanisch getrennten Sensoren zur Spannungsmessung und/oder zur Überwachung der elektrischen Spannung im Stromleiter zwischen den oder benachbart zu den Sicherungskomponenten eingerichtet sind. Die galvanisch getrennten Sensoren können mit der Prozessoreinheit verbunden sein und insbesondere von diesem ausgelesen werden, wobei die Verbindung der galvanisch getrennten Sensoren zur Prozessoreinheit galvanisch getrennt ist von der Verbindung der galvanisch getrennten Sensoren zum Stromleiter. Eine derartige galvanische Trennung ist insbesondere bei hohen Spannungen und/oder hohen Strömen vorteilhaft, die über den Stromleiter geführt werden.

Weiterhin kann wenigstens ein thermisches Messelement eingerichtet sein, wobei dem ersten Halbleiterschaltmittel und/oder dem zweiten Halbleiterschaltmittel jeweils ein thermisches Messelement zugeordnet ist.

So kann die Temperatur sowie den Strom mit den Stromstärkensensoren gemessen und auf Plausibilität geprüft werden. Es kann beispielsweise ausgesagt werden, dass ein fehlerfrei arbeitender Halbleiterschalter bei einer bestimmten Stromstärke eine bestimmte Temperatur annimmt. Dieser "gesunde Zustand" kann beispielsweise über eine Plausibilität geprüft werden.

Denkbar ist dabei auch die Zuordnung thermischer Messelemente zu den galvanisch trennenden Schaltmitteln, wobei eine Erwärmung bei beispielsweise zu großen Strömen im Stromleiter die Halbleiterschaltmittel stärker erwärmen als die galvanisch trennenden Schaltmittel. Es ist jedoch möglich, dass ein galvanisch trennendes Schaltmittel beispielsweise durch Funkenschlag eine Oberflächenbeschädigung der Kontaktflächen aufweist, sodass auch ein galvanisch trennendes Schaltmittel eine Wärmeentwicklung erzeugen kann. Die thermischen Messelemente werden ebenso mittels der Prozessoreinheit überwacht, wobei beispielsweise dann, wenn ein thermisches Messelement eine Temperaturerhöhung sensiert, diese Temperatur mit dem weiteren thermischen Messelement vergleicht, und bei Überschreiten einer maximalen Differenz beispielsweise eine Abschaltung der Sicherungseinrichtung erfolgt.

Die Plausibilitätsprüfung der Sicherungseinrichtung kann insbesondere mit den Stromstärkensensoren vorgenommen werden, sodass sowohl ein Stromstärkensensor auf der Seite des Eingangskontaktes mit einem Wert eines Stromstärkensensors auf dem Ausgangskontakt verglichen wird, insbesondere können aber sowohl am Eingangskontakt als auch am Ausgangskontakt zwei Stromstärkensensoren eingerichtet sein, die jeweilige Werte liefern, die ebenfalls miteinander verglichen werden. Wird eine Plausibilitätsprüfung vorgenommen, so können Maximalabweichungen der Messwerte der Stromstärkensensoren zugrunde gelegt werden, sodass sowohl über die Stromstärkensensoren als auch über die galvanisch getrennten Sensoren die Plausibilität geprüft werden kann, um eine Aussage über den Funktionszustand der einzelnen Sicherungskomponenten zu treffen, etwa über Optokoppler.

Die Prozessoreinheit kann ein KI-Modul aufweisen, also ein Modul, das die Nutzung einer künstlichen Intelligenz ermöglicht. Ferner kann die Prozessoreinheit eine Energieversorgung aufweisen, beispielsweise über einen Netzanschluss oder einen Energiespeicher. Die Sicherungskomponenten, die jeweils mit der Prozessoreinheit verbunden sind, werden wiederum über die Prozessoreinheit mit einem Schaltstrom sowie einem Überwachungssignal versorgt.

Die Messung des Stroms im Stromleiter über die Stromstärkensensoren kann vor, während und/oder nach dem Abschalten eines der weiteren Sicherungskomponenten erfolgen, ebenso kann die Spannungsmessung an den Punkten außerhalb oder zwischen den Sicherungskomponenten über die galvanisch getrennten Sensoren erfolgen. Es ist beispielsweise bekannt, welche Ein- und Abschaltcharakteristik sowohl Halbleiterschaltmittel als auch galvanisch trennende Schaltmittel aufweisen, wenn diese fehlerfrei funktionieren. Erfolgt eine Abweichung der Einschalt- und/oder Abschaltcharakteristik im sehr kurzzeitigen Strom- und/oder Spannungsverlauf, kann über die Prozessoreinheit ein Fehler in den Sicherungskomponenten erkannt werden, sodass beispielsweise die Prozessoreinheit einen Fehler ausgibt.

So betrifft die Erfindung ferner ein Verfahren zum Betrieb einer Sicherungseinrichtung, wobei mit den ersten und/oder zweiten Stromstärkensensoren und mit den dritten und/oder vierten Stromstärkensensoren ein Stromfluss an der jeweiligen Position im Stromleiter vor und nach den weiteren Sicherungskomponenten gemessen wird, insbesondere vor, während und/oder nach dem Abschalten eines der weiteren Sicherungskomponenten. Mittels der galvanisch getrennten Sensoren wird vor und/oder zwischen den weiteren Sicherungskomponenten eine Spannung gemessen, insbesondere vor, während und/oder nach dem Abschalten eines der weiteren Sicherungskomponenten.

Schließlich kann mit den thermischen Messelementen die Temperatur des ersten Halbleiterschaltmittels und/oder des zweiten Halbleiterschaltmittels gemessen und/oder überwacht werden, wobei eine Plausibilitätsprüfung der gemessenen und/oder überwachten Temperatur mit dem Schaltzustand des wenigstens einen Halbleiterschaltmittels mittels der Prozessoreinheit vorgenommen wird.

Ferner kann eine Kommunikationsschnittstelle eingerichtet werden, mit der die Schalt- und Messinformationen der Sicherungskomponenten an eine externe Recheneinheit übermittelt werden, wobei eine Überwachung der Funktion und/oder des Zustandes der Sicherungseinrichtung mittels der externen Recheneinheit vorgenommen wird. Der Prozessoreinheit kann zur Selbstdiagnose der Sicherungseinrichtung eigenständig einzelne Sicherungskomponenten aktivieren oder deaktivieren und mittels der ersten und zweiten Stromstärkensensoren und/oder der dritten und vierten Stromstärkensensoren die Plausibilität des fließenden Stromes und/oder mittels der galvanisch getrennten Sensoren die Plausibilität der herrschenden Spannung vor, nach oder zwischen den Sicherungskomponenten prüfen. Auch ist es denkbar, dass manuell bedienbare Tastelemente eingerichtet sind, mit denen die Funktion der Sicherungskomponenten auf gleiche Weise geprüft wird, wenn beispielsweise ein Bediener die Tastelemente bedient.

### BEVORZUGTES AUSFÜHRUNGSBEISPIEL DER ERFINDUNG

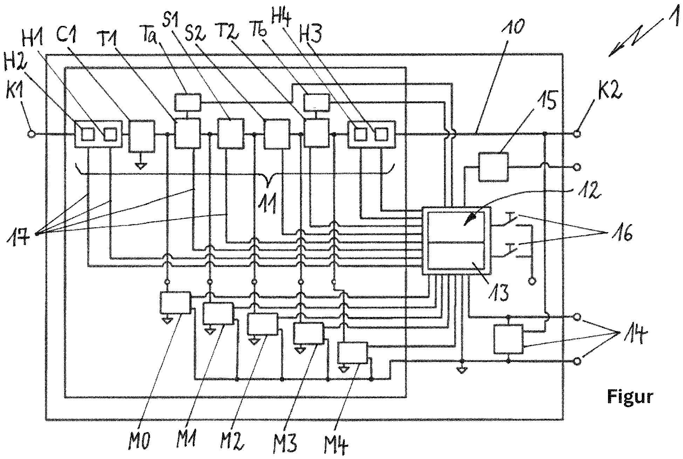

Weitere, die Erfindung verbessernde Maßnahmen werden nachstehend gemeinsam mit der Beschreibung eines bevorzugten Ausführungsbeispiels der Erfindung anhand der einzigen Figur näher dargestellt. Es zeigt:
die Figur eine schematisierte Schaltanordnung der elektrischen Sicherungseinrichtung.

Sicherungseinrichtung 1 für eine elektrische Absicherung eines Stromleiters 10, der sich von einem Eingangskontakt K1 bis zu einem Ausgangskontakt K2 erstreckt und in dem mehrere Sicherungskomponenten 11 angeordnet sind, die mittels einer Prozessoreinheit 12 über Steuerleitungen 17 steuerbar und überwachbar sind, wobei die Sicherungskomponenten 11 folgendes umfassen: einen ersten H1 und/oder einen zweiten Stromstärkensensor H2 zur Überwachung des aktuell fließenden Stromes im Stromleiter 10; ein erstes T1 und ein zweites Halbleiterschaltmittel T2 zur Abschaltung des Stromflusses im Stromleiter 10; ein erstes S1 und ein zweites galvanisch trennendes Schaltmittel S2 zur Abschaltung des Stromflusses im Stromleiter 10; einen dritten H3 und/oder einen vierten Stromstärkensensor H4 zur Überwachung des aktuell fließenden Stromes im Stromleiter 10; wobei die ersten T1 und zweiten Halbleiterschaltmittel T2 und die ersten S1 und zweiten galvanisch trennenden Schaltmittel S2 von dem ersten H1 und/oder zweiten Stromstärkensensor H2 auf einer ersten Seite und von dem dritten H3 und/oder vierten Stromstärkensensor H4 auf einer zweiten Seite entlang des Stromleiters 10 eingeschlossen sind.

Weiterhin ist sind die ersten und zweiten galvanisch trennenden Schaltmittel S1, S2 vom ersten Halbleiterschaltmittel T1 auf einer ersten Seite und vom zweiten Halbleiterschaltmittel T2 auf einer zweiten Seite entlang des Stromleiters 10 eingeschlossen.

Insgesamt kann die Schaltung daher so aussehen, dass die Sicherungskomponenten 11 in nicht abschließender Aufzählung beginnend vom Eingangskontakt K1 bis zum Ausgangskontakt K2 entlang des Stromleiters 10 folgende Reihenfolge aufweisen: erster Stromstärkensensor H1 und/oder zweiter Stromstärkensensor H2; erstes Halbleiterschaltmittel T1; erstes galvanisch trennendes Schaltmittel S1; zweites galvanisch trennendes Schaltmittel S2; zweites Halbleiterschaltmittel T2; dritter Stromstärkensensor H3 und/oder vierter Stromstärkensensor H4.

In der Anordnung der Sicherungskomponenten 11 ist ein ladungsspeicherndes Bauteil C1 eingebracht, insbesondere ein elektrischer Kondensator oder ein elektrischer Akkumulator, um bei spannungslosem Eingangskontakt K1 eine Selbstdiagnose zu ermöglichen.

Ferner ist das ladungsspeichernde Bauteil C1 zwischen dem ersten oder zweiten Stromstärkensensor H1, H2 einerseits und dem ersten Halbleiterschaltmittel T1 andererseits im Stromleiter 10 angeordnet und erfüllt eine Filterfunktion.

Die Darstellung zeigt weiterhin mehrere galvanisch getrennte Sensoren M0, M1, M2, M3 und M4, wobei die galvanisch getrennten Sensoren M0, M1, M2, M3 und M4 zur Spannungsmessung und/oder -Überwachung der elektrischen Spannung im Stromleiter 10 zwischen den oder benachbart zu den Sicherungskomponenten 11 eingerichtet sind und durch Optokoppler gebildet werden können. Die galvanisch getrennten Sensoren (M0, M1, M2, M3 und M4) sind dabei zugleich mit der Prozessoreinheit 12 verbunden und von diesem auslesbar, wobei die Verbindung der galvanisch getrennten Sensoren M0, M1, M2, M3 und M4 zur Prozessoreinheit 12 galvanisch getrennt ist von der Verbindung der galvanisch getrennten Sensoren M0, M1, M2, M3 und M4 zum Stromleiter 10. Die galvanisch getrennten Sensoren M0, M1, M2, M3 und M4 werden beispielsweise durch Optokoppler gebildet.

Weiterhin zeigt das Ausführungsbeispiel wenigstens ein thermisches Messelement Ta, Tb, also beispielsweise ein Temperaturfühler, wobei dem ersten Halbleiterschaltmittel T1 und dem zweiten Halbleiterschaltmittel T2 jeweils ein thermisches Messelement Ta, Tb zugeordnet ist.

Die Prozessoreinheit 12 kann ein KI-Modul 13 aufweisen und ferner ist eine Energieversorgung 14 der Prozessoreinheit 12 vorgesehen, wobei die Prozessoreinheit 12 zugleich zur Energieversorgung der Sicherungskomponenten 11 zu dessen Ansteuerung und/oder Überwachung eingerichtet ist. Das KI-Modul 13 kann entweder lokal, insbesondere als Bestandteil der Prozessoreinheit 12 oder mit einem über ein Netzwerk verbundenen Cloud- oder Netzwerkservice realisiert sein.

Mit den ersten und zweiten Stromstärkensensoren H1, H2 und mit den dritten und/oder vierten Stromstärkensensoren H3, H4 kann der Stromfluss an der jeweiligen Position im Stromleiter 10 vor und nach den weiteren Sicherungskomponenten 11 gemessen werden, insbesondere vor, während und/oder nach dem Abschalten eines der weiteren Sicherungskomponenten 11. Die Stromstärkensensoren H1, H2 und H3, H4 können zum Beispiel Hall-Sensoren bilden und eine Stromstärke im Stromleiter 10 messen bzw. überwachen.

Mittels der galvanisch getrennten Sensoren M0, M1, M2, M3 und M4 hingegen kann vor, zwischen oder nach den weiteren Sicherungskomponenten 11 eine Spannung gemessen werden, insbesondere vor, während und/oder nach dem An- oder Abschalten eines der weiteren Sicherungskomponenten 11.

Mit den thermischen Messelementen Ta, Tb kann die Temperatur des ersten Halbleiterschaltmittels T1 und des zweiten Halbleiterschaltmittels T2 gemessen und insbesondere überwacht werden, wobei eine Plausibilitätsprüfung der gemessenen und/oder überwachten Temperatur mit dem Schaltzustand des wenigstens einen Halbleiterschaltmittels T1, T2 mittels der Prozessoreinheit 12 vorgenommen werden kann.

Weiterhin ist eine Kommunikationsschnittstelle 15 eingerichtet, mit der die Schalt- und Messinformationen der Sicherungskomponenten 11 an eine externe Recheneinheit übermittelt werden, wobei eine Überwachung der Funktion und/oder des Zustandes der Sicherungseinrichtung 1 mittels der externen Recheneinheit vorgenommen wird.

Die Prozessoreinheit 12 kann auch eine Selbstdiagnose der Sicherungseinrichtung 1 eigenständig vornehmen, indem dieser einzelne Sicherungskomponenten 11 aktiviert oder deaktiviert und mittels der ersten und zweiten Stromstärkensensoren H1, H2 und/oder der dritten und vierten Stromstärkensensoren H3, H4 die Plausibilität des fließenden Stromes und/oder mittels der galvanisch getrennten Sensoren M0, M1, M2, M3 und M4 die Plausibilität der herrschenden Spannung vor, nach oder zwischen den Sicherungskomponenten 11 prüft.

Alternativ zur selbsttätigen Überprüfung kann wenigstens ein manuell bedienbares Tastelement 16 eingerichtet sein, mit dem die Funktion der Sicherungskomponenten 11 geprüft werden kann, indem die Prozessoreinheit 12 einzelne Sicherungskomponenten 11 aktiviert oder deaktiviert und mittels der ersten und zweiten Stromstärkensensoren H1, H2 und/oder der dritten und vierten Stromstärkensensoren H3, H4 die Plausibilität des fließenden Stromes und/oder mittels der galvanisch getrennten Sensoren (M0, M1, M2, M3 und M4) die Plausibilität der herrschenden Spannung vor, nach oder zwischen den Sicherungskomponenten 11 prüft.

Mit dem beschriebenen Ausführungsbeispiel wird eine Sicherungseinrichtung 1 geschaffen, die Aussagen über den funktionalen Zustand der einzelnen Sicherungskomponenten 11 der Sicherungseinrichtung 1 beispielsweise in regelmäßigen Zeitabständen oder per manuellem Tastendruck zulässt, wobei die Sicherungseinrichtung 1 eine sehr hohe Betriebssicherheit aufweist.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein.

### Bezugszeichenliste:

- 1: Sicherungseinrichtung
- 10: Stromleiter
- 11: Sicherungskomponente
- 12: Prozessoreinheit
- 13: KI-Modul
- 14: Energieversorgung
- 15: Kommunikationsschnittstelle
- 16: Tastelement
- 17: Steuerleitung
- C1: ladungsspeicherndes Bauteil
- H1: erster Stromstärkensensor
- H2: zweiter Stromstärkensensor
- H3: dritter Stromstärkensensor
- H4: vierter Stromstärkensensor
- K1: Eingangskontakt
- K2: Ausgangskontakt
- M0: galvanisch getrennter Sensor
- M1: galvanisch getrennter Sensor
- M2: galvanisch getrennter Sensor
- M3: galvanisch getrennter Sensor
- M4: galvanisch getrennter Sensor
- Ta: thermisches Messelement
- Tb: thermisches Messelement

- T1: erstes Halbleiterschaltmittel
- T2: zweites Halbleiterschaltmittel
- S1: erstes galvanisch trennendes Schaltmittel
- S2: zweites galvanisch trennendes Schaltmittel

## Patentansprüche

1. Sicherungseinrichtung (1) für eine elektrische Absicherung eines Stromleiters (10), der sich von einem Eingangskontakt (K1) bis zu einem Ausgangskontakt (K2) erstreckt und in dem mehrere Sicherungskomponenten (11) angeordnet sind, die mittels einer Prozessoreinheit (12) über Steuerleitungen (17) steuerbar und überwachbar sind,
**dadurch gekennzeichnet,**
**dass** die Sicherungskomponenten (11) wenigstens folgendes umfassen:
- einen ersten und/oder einen zweiten Stromstärkensensor (H1, H2) zur Überwachung des aktuell fließenden Stromes im Stromleiter (10);
- ein erstes und ein zweites Halbleiterschaltmittel (T1, T2) zur Abschaltung des Stromflusses im Stromleiter (10);
- ein erstes und ein zweites galvanisch trennendes Schaltmittel (S1, S2) zur Abschaltung des Stromflusses im Stromleiter (10);
- einen dritten und/oder einen vierten Stromstärkensensor (H3, H4) zur Überwachung des aktuell fließenden Stromes im Stromleiter (10);
- wobei die ersten und zweiten Halbleiterschaltmittel (T1, T2) und die ersten und zweiten galvanisch trennenden Schaltmittel (S1, S2) von dem ersten und/oder zweiten Stromstärkensensor (H1, H2) auf einer ersten Seite und von dem dritten und/oder vierten Stromstärkensensor (H3, H4) auf einer zweiten Seite entlang des Stromleiters (10) eingeschlossen sind.

2. Sicherungseinrichtung (1) nach Anspruch 1,
**dadurch gekennzeichnet,**
**dass** die ersten und zweiten galvanisch trennenden Schaltmittel (S1, S2) vom ersten Halbleiterschaltmittel (T1) auf einer ersten Seite und vom zweiten Halbleiterschaltmittel (T2) auf einer zweiten Seite entlang des Stromleiters (10) eingeschlossen sind.

3. Sicherungseinrichtung (1) nach Anspruch 1 oder 2,
**dadurch gekennzeichnet,**
**dass** die Sicherungskomponenten (11) in nicht abschließender Aufzählung beginnend vom Eingangskontakt (K1) bis zum Ausgangskontakt (K2) entlang des Stromleiters (10) folgende Reihenfolge aufweisen:
- erster Stromstärkensensor (H1) und/oder
- zweiter Stromstärkensensor (H2);
- erstes Halbleiterschaltmittel (T1);
- erstes galvanisch trennendes Schaltmittel (S1);
- zweites galvanisch trennendes Schaltmittel (S1);
- zweites Halbleiterschaltmittel (T1);
- dritter Stromstärkensensor (H3) und/oder
- vierter Stromstärkensensor (H4).

4. Sicherungseinrichtung (1) nach einem der Ansprüche 1 bis 3,
**dadurch gekennzeichnet,**
**dass** in der Anordnung der Sicherungskomponenten (11) ein ladungsspeicherndes Bauteil (C1), insbesondere ein elektrischer Kondensator oder ein elektrischer Akkumulator, eingebracht ist, um bei spannungslosem Eingangskontakt (K1) eine Selbstdiagnose zu ermöglichen.

5. Sicherungseinrichtung (1) nach Anspruch 4,
**dadurch gekennzeichnet,**
**dass** das ladungsspeichernde Bauteil (C1) zwischen dem ersten oder zweiten Stromstärkensensor (H1, H2) einerseits und dem ersten Halbleiterschaltmittel (T1) andererseits im Stromleiter (10) angeordnet ist.

6. Sicherungseinrichtung (1) nach einem der vorgenannten Ansprüche, **dadurch gekennzeichnet,**
**dass** wenigstens ein und vorzugsweise mehrere galvanisch getrennte Sensoren (M0, M1, M2, M3 und M4) vorgesehen sind, die zur Spannungsmessung und/oder -Überwachung der elektrischen Spannung im Stromleiter (10) zwischen den oder benachbart zu den Sicherungskomponenten (11) eingerichtet sind und/oder wobei die galvanisch getrennten Sensoren (M0, M1, M2, M3 und M4) Optokoppler bilden.

7. Sicherungseinrichtung (1) nach Anspruch 6,
**dadurch gekennzeichnet,**
**dass** die galvanisch getrennten Sensoren (M0, M1, M2, M3 und M4) mit der Prozessoreinheit (12) verbunden und von diesem auslesbar sind, wobei die Verbindung der galvanisch getrennten Sensoren (M0, M1, M2, M3 und M4) zur Prozessoreinheit (12) galvanisch getrennt ist von der Verbindung der galvanisch getrennten Sensoren (M0, M1, M2, M3 und M4) zum Stromleiter (10).

8. Sicherungseinrichtung (1) nach einem der vorgenannten Ansprüche, **dadurch gekennzeichnet,**
**dass** wenigstens ein thermisches Messelement (Ta, Tb) eingerichtet ist, wobei dem ersten Halbleiterschaltmittel (T1) und/oder dem zweiten Halbleiterschaltmittel (T2) jeweils ein thermisches Messelement (Ta, Tb) zugeordnet ist.

9. Sicherungseinrichtung (1) nach einem der vorgenannten Ansprüche, **dadurch gekennzeichnet,**
**dass** die Prozessoreinheit (12) ein KI-Modul (13) aufweist und/oder dass eine Energieversorgung (14) wenigstens der Prozessoreinheit (12) vorgesehen ist, wobei die Prozessoreinheit (12) zur Energieversorgung der Sicherungskomponenten (11) zu dessen Ansteuerung und/oder Überwachung eingerichtet ist.

10. Verfahren zum Betrieb einer Sicherungseinrichtung (1) nach einem der vorgenannten Ansprüche,
**dadurch gekennzeichnet,**
**dass** mit den ersten und/oder zweiten Stromstärkensensoren (H1, H2) und mit den dritten und/oder vierten Stromstärkensensoren (H3, H4) ein Stromfluss an der jeweiligen Position im Stromleiter (10) vor und nach den weiteren Sicherungskomponenten (11) gemessen wird, insbesondere vor, während und/oder nach dem Abschalten eines der weiteren Sicherungskomponenten (11).

11. Verfahren zum Betrieb einer Sicherungseinrichtung (1) nach Anspruch 10,
**dadurch gekennzeichnet,**
**dass** mittels der galvanisch getrennten Sensoren (M0, M1, M2, M3 und M4) vor und/oder zwischen oder nach den weiteren Sicherungskomponenten (11) eine Spannung gemessen wird, insbesondere vor, während und/oder nach dem Abschalten eines der weiteren Sicherungskomponenten (11).

12. Verfahren zum Betrieb einer Sicherungseinrichtung (1) nach Anspruch 10 oder 11,
**dadurch gekennzeichnet,**
**dass** mit den thermischen Messelementen (Ta, Tb) die Temperatur des ersten Halbleiterschaltmittels (T1) und/oder des zweiten Halbleiterschaltmittels (T2) gemessen und/oder überwacht wird, wobei eine Plausibilitätsprüfung der gemessenen und/oder überwachten Temperatur mit dem Schaltzustand des wenigstens einen Halbleiterschaltmittels (T1, T2) mittels der Prozessoreinheit (12) vorgenommen wird.

13. Verfahren zum Betrieb einer Sicherungseinrichtung (1) nach einem der Ansprüche 10 bis 12,
**dadurch gekennzeichnet,**
**dass** eine Kommunikationsschnittstelle (15) eingerichtet ist, mit der die Schalt- und Messinformationen der Sicherungskomponenten (11) an eine externe Recheneinheit übermittelt werden, wobei eine Überwachung der Funktion und/oder des Zustandes der Sicherungseinrichtung (1) mittels der externen Recheneinheit vorgenommen wird.

14. Verfahren zum Betrieb einer Sicherungseinrichtung (1) nach einem der Ansprüche 10 bis 13,
**dadurch gekennzeichnet,**
**dass** die Prozessoreinheit (12) zur Selbstdiagnose der Sicherungseinrichtung (1) eigenständig einzelne Sicherungskomponenten (11) aktiviert oder deaktiviert und mittels der ersten und zweiten Stromstärkensensoren (H1, H2) und/oder der dritten und vierten Stromstärkensensoren (H3, H4) die Plausibilität des fließenden Stromes und/oder mittels der galvanisch getrennten Sensoren (M0, M1, M2, M3 und M4) die Plausibilität der herrschenden Spannung vor, nach oder zwischen den Sicherungskomponenten (11) prüft.

15. Verfahren zum Betrieb einer Sicherungseinrichtung (1) nach einem der Ansprüche 10 bis 13,
**dadurch gekennzeichnet,**
**dass** wenigstens ein manuell bedienbares Tastelement (16) eingerichtet ist, mit dem die Funktion der Sicherungskomponenten (11) geprüft werden kann, indem die Prozessoreinheit (12) einzelne Sicherungskomponenten (11) aktiviert oder deaktiviert und mittels der ersten und zweiten Stromstärkensensoren (H1, H2) und/oder der dritten und vierten Stromstärkensensoren (H3, H4) die Plausibilität des fließenden Stromes und/oder mittels der galvanisch getrennten Sensoren (M0, M1, M2, M3 und M4) die Plausibilität der herrschenden Spannung vor, nach oder zwischen den Sicherungskomponenten (11) prüft.

## Geänderte Patentansprüche

### Geänderte Patentansprüche gemäss Regel 137(2) EPÜ.

1. Sicherungseinrichtung (1) für eine elektrische Absicherung eines Stromleiters (10), der sich von einem Eingangskontakt (K1) bis zu einem Ausgangskontakt (K2) erstreckt und in dem mehrere Sicherungskomponenten (11) angeordnet sind, die mittels einer Prozessoreinheit (12) über Steuerleitungen (17) steuerbar und überwachbar sind,
**dadurch gekennzeichnet,**
**dass** die Sicherungskomponenten (11) wenigstens folgendes umfassen:
- einen ersten und/oder einen zweiten Stromstärkensensor (H1, H2) zur Überwachung des aktuell fließenden Stromes im Stromleiter (10);
- ein erstes und ein zweites Halbleiterschaltmittel (T1, T2) zur Abschaltung des Stromflusses im Stromleiter (10);
- ein erstes und ein zweites galvanisch trennendes Schaltmittel (S1, S2) zur Abschaltung des Stromflusses im Stromleiter (10);
- einen dritten und/oder einen vierten Stromstärkensensor (H3, H4) zur Überwachung des aktuell fließenden Stromes im Stromleiter (10);
- wobei die ersten und zweiten Halbleiterschaltmittel (T1, T2) und die ersten und zweiten galvanisch trennenden Schaltmittel (S1, S2) von dem ersten und/oder zweiten Stromstärkensensor (H1, H2) auf einer ersten Seite und von dem dritten und/oder vierten Stromstärkensensor (H3, H4) auf einer zweiten Seite entlang des Stromleiters (10) eingeschlossen sind, und wobei die Sicherungskomponenten (11) in nicht abschließender Aufzählung beginnend vom Eingangskontakt (K1) bis zum Ausgangskontakt (K2) entlang des Stromleiters (10) folgende Reihenfolge aufweisen:
- erster Stromstärkensensor (H1) und/oder
- zweiter Stromstärkensensor (H2);
- erstes Halbleiterschaltmittel (T1);
- erstes galvanisch trennendes Schaltmittel (S1);
- zweites galvanisch trennendes Schaltmittel (S1);
- zweites Halbleiterschaltmittel (T1);
- dritter Stromstärkensensor (H3) und/oder
- vierter Stromstärkensensor (H4).

2. Sicherungseinrichtung (1) nach Anspruch 1,
**dadurch gekennzeichnet,**
**dass** die Sicherungseinrichtung (1) diversitär, resilient, redundant und vollständig diagnostizierbar eingerichtet ist, wobei die ersten und zweiten galvanisch trennenden Schaltmittel (S1, S2) vom ersten Halbleiterschaltmittel (T1) auf einer ersten Seite und vom zweiten Halbleiterschaltmittel (T2) auf einer zweiten Seite entlang des Stromleiters (10) eingeschlossen sind.

3. Sicherungseinrichtung (1) nach einem der Ansprüche 1 oder 1,
**dadurch gekennzeichnet,**
**dass** in der Anordnung der Sicherungskomponenten (11) ein ladungsspeicherndes Bauteil (C1), insbesondere ein elektrischer Kondensator oder ein elektrischer Akkumulator, eingebracht ist, mit dem eine Spannung bereitstellbar ist, sodass über die Prozessoreinheit einzelne Sicherungskomponenten (11) ein- und ausschaltbar sind, indem eine Abfrage über die Stromstärkensensoren (H1, H2, H3, H4) erfolgt, um auch bei spannungslosem Eingangskontakt (K1) eine Selbstdiagnose zu ermöglichen.

4. Sicherungseinrichtung (1) nach Anspruch 3,
**dadurch gekennzeichnet,**
**dass** das ladungsspeichernde Bauteil (C1) zwischen dem ersten oder zweiten Stromstärkensensor (H1, H2) einerseits und dem ersten Halbleiterschaltmittel (T1) andererseits im Stromleiter (10) angeordnet ist.

5. Sicherungseinrichtung (1) nach einem der vorgenannten Ansprüche,
**dadurch gekennzeichnet,**
**dass** wenigstens ein und vorzugsweise mehrere galvanisch getrennte Sensoren (M0, M1, M2, M3 und M4) vorgesehen sind, die zur Spannungsmessung und/oder -überwachung der elektrischen Spannung im Stromleiter (10) zwischen den oder benachbart zu den Sicherungskomponenten (11) eingerichtet sind und/oder wobei die galvanisch getrennten Sensoren (M0, M1, M2, M3 und M4) Optokoppler bilden.

6. Sicherungseinrichtung (1) nach Anspruch 5,
**dadurch gekennzeichnet,**
**dass** die galvanisch getrennten Sensoren (M0, M1, M2, M3 und M4) mit der Prozessoreinheit (12) verbunden und von diesem auslesbar sind, wobei die Verbindung der galvanisch getrennten Sensoren (M0, M1, M2, M3 und M4) zur Prozessoreinheit (12) galvanisch getrennt ist von der Verbindung der galvanisch getrennten Sensoren (M0, M1, M2, M3 und M4) zum Stromleiter (10).

7. Sicherungseinrichtung (1) nach einem der vorgenannten Ansprüche,
**dadurch gekennzeichnet,**
**dass** wenigstens ein thermisches Messelement (Ta, Tb) eingerichtet ist, wobei dem ersten Halbleiterschaltmittel (T1) und/oder dem zweiten Halbleiterschaltmittel (T2) jeweils ein thermisches Messelement (Ta, Tb) zugeordnet ist.

8. Sicherungseinrichtung (1) nach einem der vorgenannten Ansprüche,
**dadurch gekennzeichnet,**
**dass** die Prozessoreinheit (12) ein KI-Modul (13) aufweist und dass eine Energieversorgung (14) wenigstens der Prozessoreinheit (12) vorgesehen ist, wobei die Prozessoreinheit (12) zur Energieversorgung der Sicherungskomponenten (11) zu dessen Ansteuerung und/oder Überwachung eingerichtet ist.

9. Verfahren zum Betrieb einer Sicherungseinrichtung (1) nach einem der vorgenannten Ansprüche,
**dadurch gekennzeichnet,**
**dass** mit den ersten und/oder zweiten Stromstärkensensoren (H1, H2) und mit den dritten und/oder vierten Stromstärkensensoren (H3, H4) ein Stromfluss an der jeweiligen Position im Stromleiter (10) vor und nach den weiteren Sicherungskomponenten (11) gemessen wird, insbesondere vor, während oder nach dem Abschalten eines der weiteren Sicherungskomponenten (11).

10. Verfahren zum Betrieb einer Sicherungseinrichtung (1) nach Anspruch 9,
**dadurch gekennzeichnet,**
**dass** mittels der galvanisch getrennten Sensoren (M0, M1, M2, M3 und M4) vor und/oder zwischen oder nach den weiteren Sicherungskomponenten (11) eine Spannung gemessen wird, insbesondere vor, während oder nach dem Abschalten eines der weiteren Sicherungskomponenten (11).

11. Verfahren zum Betrieb einer Sicherungseinrichtung (1) nach Anspruch 9 oder 10,
**dadurch gekennzeichnet,**
**dass** mit den thermischen Messelementen (Ta, Tb) die Temperatur des ersten Halbleiterschaltmittels (T1) oder des zweiten Halbleiterschaltmittels (T2) gemessen und/oder überwacht wird, wobei eine Plausibilitätsprüfung der gemessenen oder überwachten Temperatur mit dem Schaltzustand des wenigstens einen Halbleiterschaltmittels (T1, T2) mittels der Prozessoreinheit (12) vorgenommen wird.

12. Verfahren zum Betrieb einer Sicherungseinrichtung (1) nach einem der Ansprüche 9 bis 11,
**dadurch gekennzeichnet,**
**dass** eine Kommunikationsschnittstelle (15) eingerichtet ist, mit der die Schalt- und Messinformationen der Sicherungskomponenten (11) an eine externe Recheneinheit übermittelt werden, wobei eine Überwachung der Funktion und/oder des Zustandes der Sicherungseinrichtung (1) mittels der externen Recheneinheit vorgenommen wird.

13. Verfahren zum Betrieb einer Sicherungseinrichtung (1) nach einem der Ansprüche 9 bis 12,
**dadurch gekennzeichnet,**
**dass** die Prozessoreinheit (12) zur Selbstdiagnose der Sicherungseinrichtung (1) eigenständig einzelne Sicherungskomponenten (11) aktiviert oder deaktiviert und mittels der ersten und zweiten Stromstärkensensoren (H1, H2) oder der dritten und vierten Stromstärkensensoren (H3, H4) die Plausibilität des fließenden Stromes und/oder mittels der galvanisch getrennten Sensoren (M0, M1, M2, M3 und M4) die Plausibilität der herrschenden Spannung vor, nach oder zwischen den Sicherungskomponenten (11) prüft.

14. Verfahren zum Betrieb einer Sicherungseinrichtung (1) nach einem der Ansprüche 9 bis 12,
**dadurch gekennzeichnet,**
**dass** wenigstens ein manuell bedienbares Tastelement (16) eingerichtet ist, mit dem die Funktion der Sicherungskomponenten (11) geprüft werden kann, indem die Prozessoreinheit (12) einzelne Sicherungskomponenten (11) aktiviert oder deaktiviert und mittels der ersten und zweiten Stromstärkensensoren (H1, H2) oder der dritten und vierten Stromstärkensensoren (H3, H4) die Plausibilität des fließenden Stromes oder mittels der galvanisch getrennten Sensoren (M0, M1, M2, M3 und M4) die Plausibilität der herrschenden Spannung vor, nach oder zwischen den Sicherungskomponenten (11) prüft.
